(19) **Europäisches Patentamt**
**European Patent Office**
**Office européen des brevets**

(11)  **EP 1 851 173 B1**

(12)  **EUROPEAN PATENT SPECIFICATION**

(45) Date of publication and mention
of the grant of the patent:
**20.11.2013  Bulletin 2013/47**

(51) Int Cl.:
*C02F 1/28* (2006.01)        *B01J 20/12* (2006.01)
*C02F 101/30* (2006.01)      *C02F 101/36* (2006.01)

(21) Application number: **06728167.5**

(22) Date of filing: **18.01.2006**

(86) International application number:
**PCT/IL2006/000072**

(87) International publication number:
**WO 2006/077583 (27.07.2006 Gazette 2006/30)**

(54) **REMOVAL OF ORGANIC POLLUTANTS FROM CONTAMINATED WATER**

Entfernung organischer Schadstoffe aus verunreinigtem Wasser

RETRAIT DE POLLUANTS ORGANIQUES D'UNE EAU CONTAMINEE

(84) Designated Contracting States:
**AT BE BG CH CY CZ DE DK EE ES FI FR GB GR HU IE IS IT LI LT LU LV MC NL PL PT RO SE SI SK TR**

(30) Priority: **18.01.2005  US 644022 P**

(43) Date of publication of application:
**07.11.2007  Bulletin 2007/45**

(73) Proprietor: **YISSUM RESEARCH DEVELOPMENT COMPANY OF THE HEBREW UNIVERSITY OF JERUSALEM Givat Ram, Jerusalem 91390 (IL)**

(72) Inventors:
 • **NIR, Shlomo**
  **76804 Mazkeret Batya (IL)**
 • **RUBIN, Baruch**
  **76804 Mazkeret Batya (IL)**
 • **MISHAEL, Yael G.**
  **76281 Rehovot (IL)**
 • **ZADAKA, Dikla**
  **76430 Rehovot (IL)**
 • **POLUBESOVA, Tamara**
  **76281 Rehovot (IL)**
 • **WAKSHAL, Eliyahu**
  **53464 Givataim (IL)**
 • **RABINOVITZ, Onn**
  **12215 Kfar Yuval (IL)**

(74) Representative: **Grünecker, Kinkeldey, Stockmair & Schwanhäusser Leopoldstrasse 4 80802 München (DE)**

(56) References cited:
**WO-A-02/052939      US-A- 4 916 095
US-B1- 6 524 485**

 • **POLUBESOVA TAMARA ET AL: "Adsorption of alizarinate-micelle complexes on Na-montmorillonite" APPL. CLAY SCI.; APPLIED CLAY SCIENCE FEBRUARY 2004, vol. 24, no. 3-4, February 2004 (2004-02), pages 177-183, XP002369941 cited in the application**

**Description**

**FIELD OF THE INVENTION**

This invention relates to methods for removal of organic pollutants from water.

**BACKGROUND OF THE INVENTION**

In the text below reference is made to prior art documents, listed at the end of the description before the claims. These prior art documents are relevant for understanding the state of the art in the field of the invention. The reference will be referred to in the text by giving their serial number from said list.

Pollution of groundwater and wells has become an environmental and economical hazard due to intensively irrigated agriculture and application of herbicides and pesticides over cultivated lands as well as waste spills within the catchments areas of the various hydrogeological basins (I).

Conventional treatment techniques such as sand filtration, sedimentation, flocculation, coagulation, chlorination and activated carbon are not effective in reducing the concentration of the organic pollutants in the presence of dissolved organic matter (2).

The adsorption of organic cations on clays transforms the clay-mineral surface from hydrophilic to hydrophobic, enhancing its affinity for sorbing neutral organic molecules of hydrophobic characteristics (3, 4), rendering it suitable for removing organic pollutants from water. When the loading of the organic cations exceeds the cation exchange capacity (CEC) of the clay, it becomes positively charged and potentially suitable for the adsorption of certain anions, such as imazaquin (5). Organoclays are widely used in wastewater treatment. Still the quality of water, which can be used for drinking, has to be improved.

Solubilization of organic pollutants by micelles of surfactants (6,7) was the basis of the micellar-enhanced ultrafiltration (8,9); however this method presents a problem of membrane fouling. Removal of the anionic pollutants by flocs, formed due to adsorption of $Al^{3+}$ onto the surface of lauryl sulfate (adsorptive micellar flocculation) was suggested by Porras-Rodriguez and Talens-Alesson (10). This method is efficient only for removal of anions, and it has limitations due to operational pH, which ranges from 2 to 3.5 and relatively high residual concentrations of $Al^{3+}$.

WO-A-02/052939 is directed to controlled release herbicidal formulations. US-A-4,916,095 relates to modified clay sorbents.

US-A-6,524,485 relates to polymer-micell complexes for immobilizing contaminants.

**SUMMARY OF THE INVENTION**

The present invention is based on the finding that a combination of a granular material with a complex of micelles of an organic cation adsorbed on clay can efficiently adsorb anionic and neutral pollutants dissolved in contaminated water. The granular material is typically in excess to said complex. The problem of the present invention is solved on the basis of claims 1 to 20.

Thus the present invention is directed to a method for purifying water from neutral or anionic pollutants present therein comprising contacting the polluted water with a mixture of (i) a granular material and (ii) a complex comprising micelles of organic cations adsorbed on clay, wherein the ratio of the organic cation and the clay is 0.3:1, to 0.7:1 (w/w).

According to one embodiment, the ratio (w/w) between the granular material and said complex being in the range of about 5:1 to about 200:1, preferably about 50:1 to about 120:1 and most preferably about 75:1 to about 100: 1.

The term "water" as used herein encompasses aqueous solutions. The aqueous solutions or "water" may be: water contaminated by industrial or domestic waste; affluent water; contaminated aqueous food products or raw material, e.g. contaminated milk, residual aqueous solution obtained after processing food.

The term "water", other than if accompanied by a descriptor thereof, will be used to refer to the contaminants/ pollutants-containing water. The term "purified water" will be used to denote water that has been purified by the inventive method or system.

The term "present" in the context of the invention refers to any manner in which pollutants or contaminants may appear in a liquid medium and includes solution, suspension, emulsion and presence as colloidal particles

In the description herein the terms "pollutants" and "contaminants" will be used interchangeably.

The term (w/w) means a ratio between the weight of one substance to that of another. Thus, a ratio (w/w) between the granular material and said complex of about 5:1 means that there are 5 weight units of the granular material for each 1 weight unit of said complex.

Said contacting may be in a continuous flow process in which the water is flown through or over said mixture. For that purpose at least one container containing said mixture is used. Said container may be a column containing said mixture through which the water is flown a rate such so as to permit the contaminants to be removed therefrom; or may be a pool, tank or reservoir into which the water is continuously introduced and continuously removed at a rate such that the mean residence time of the water in the container is sufficient to the contaminants to be removed therefrom.

Alternatively said contacting may be done in a batch-type procedure in which, for example, the polluted water is introduced into a container containing said mixture and incubated in said container for a time period sufficient for absorption of the pollutants from the water, whereupon it is removed. Such incubation may be with or without stirring or agitating the suspension of the water with said mixture.

In addition, it is possible also to introduce said mixture into reservoirs containing said water for an *in situ* purification.

Generally, the invention is not limited to the physical manner in which the method is performed.

The ratio of the organic cation and the clay is preferably about 0.4:1 to about 0.6:1, most preferably about 0.45:1 to about 0.5:1.

As noted above, a typical example of a container is a column accommodating said mixture. By one embodiment the column is entirely filled with said mixture. In accordance with another embodiment, the column is partially filled with said mixture while other portions, typically at the column's bottom may be filled with another material or different mixture. For example, one end of the column consisting about 7-10% of the column's length comprises either the granular material or a mixture of granular material with clay. It is also possible to prepare a column having alternate first and second types of layers, wherein the first layers contain said mixture and the second layers another material or different mixtures. A plurality of columns may be employed, which may be all the same or may be different.

The term "granular material" refers in particular to a material which is chemically inert, and which may be homogenous, or may be heterogeneous in size, chemical composition or structure.

The granular material is preferably composed of particles having an average particles size from about 0.2mn to about 2mm. A preferred granular material is sand. Sand is any natural material resulting from disintegrated rocks, top soil or coastal soil, typically quartz-based sand.

The clay may be any aggregate of hydrous silicate particles less than $4\mu m$ in diameter consisting of a variety of phyllosilicate minerals rich in silicon, aluminium oxides and hydroxides which include variable amounts of structural water. The clay may be chosen from kaolinite-serpentine, illite, and smectite, preferably it is chosen from a smectite, most prefrably the clay is montmorillonite $[(Na,Ca)_{0.33}(Al,Mg)_2Si_4O_{10}(OH)_2\cdot nH_2O]$.

The organic cation is a cation having amphipatic properties which is capable of forming micelles in an aqueous medium. The tendency of the organic cation to form micelles in an aqueous medium can be enhanced by increasing the concentration of salts in the medium. The micelles are essentially spherical structures wherein the hydrophobic (organic) part of the organic cation is in its interior and the ionic part faces the aqueous medium. The micelles adsorbed on the clay may comprise each several different organic cations or the clay may have adsorbed thereon different types of micelles, each of which has a different composition of organic cations.

Examples of preferred organic cations are: an ammonium cation of the type $X^+Y^-$ wherein $X^+$ is an $R"-N(R')_3$, R' being each independently a $C_{1-4}$ alkyl group, an optionally substituted phenyl or an alkylphenyl group; R" is $C_{12}-C_{20}$-alkyl preferably $C_{14}-C_{20}$-alkyl, most preferably $C_{16}-C_{20}$-alkyl and $Y^-$ is a counter ion chosen from $Cl^-$, $Br^-$ or $OH^-$,. Preferably, R' is methyl, ethyl, propyl, pheny, benzyl and R" is $C_{14}H_{29}$, $C_{15}H_{31}$, $C_{16}H_{33}$, $C_{16}H_{31}$, $C_{17}H_{35}$, $C_{17}H_{33}$, $C_{18}H_{37}$, $C_{18}H_{35}$, $C_{19}H_{39}$ $C_{19}H_{37}$, $C_{20}H_{41}$, $C_{20}H_{39}$ The ammonium cation is characterized as having a low critical micelle concentration (CMC) of less than 1mM. Consequently, in the complex of an organic cation adsorbed on clay, the organic cation is adsorbed as a micelle.

The pollutants which may be removed from water according to the invention are neutral or anionic organic pollutants. The neutral pollutants are selected from the group comprising of neutral herbicides or a halogenated $C_{1-8}$ moiety. The halogenated $C_{1-8}$ moiety is selected from $C_{1-8}$ halogenoalkyls, $C_{1-8}$ halogenoalkenyls, $C_{1-8}$ halogenoalkynyls which may be perhalogenated or their mixtures. The natural herbicides are selected from chloroacetamides, uracils or ureas. In particular, the herbicides are chosen from alachlor, acetochlor bromacil, chlorotoluron, chlorpropharm, chlorbromuron, dimefuron, diuron, fenuron, fluometuron, isoproturon, isouron, propachlor, dimethachlor, lenacyl, terbacil. The halogentated $C_{1-8}$ moieties are methyl, ethyl, ethenyl, ethynyl, propyl, propenyl, propynyl, butyl, butylenyl, butynyl, pentyl, pentenyl, pentynyl hexyl, hexenyl, hexynyl comprising at least one halogen and may be also perhalogenated. The halogen is selected from F, Cl, Br, I. The anionic pollutants are selected from the group comprising of imidazolinones, triazolinones, sulfonylurea, aromatic carboxylic acids, humic acid or fulvic acid, antibiotics or their mixtures. In particular these are chosen from imazaquin, imazethapyr, imazapyr, imazamethabenz-methyl, imazamox, imazapic, chlorsulfuron, imazosulfuron, pyrazosulfuron-ethyl, primisulfuron,-methyl, nicosulfuron, bensulfuron-methyl, amicarbazone, azafenidin, sulfentrazone, sulfosulfuron. The antibiotics are tetracyclines, antibacterial such as sulfamethoxazole, sulfisoxazole, sulfamethizole, sulfazamet, sulfatolamide, sulfathiourea.

The present invention is further directed to a system for carrying out the methods described above. The system according to a preferred embodiment, intended for purifying water from neutral and/or anionic pollutants dissolved therein the system comprises at least one container adapted to receive the polluted water and containing a mixture of (i) a granular material and (ii) a complex comprising micelles of an organic cation adsorbed on clay.

In accordance with the invention that it is possible also to purify a body of water, including, for example, open water pools or reservoirs, water contained in tanks, by introducing into the water (i) the micelles of the organic cations and then introducing particulate clay, e.g. of the kind specified above, or (ii) the complex of the micelles with the clay. In the former case (that under (i)) the complexes of the micelles and the clay are formed *in situ.* Said complexes may then be permitted to sediment and the sediment may then be collected.

Thus, the present invention also provides a method for purifying water, comprising: adding into the water (i) micelles of an organic cation and particulate clay, typically first the micelles and subsequently the particulate clay, or (ii) a complex of micelles of an organic cation adsorbed on clay. In the former case a complex between the particulate clay and the micelles is formed *in situ.*

By one embodiment, after an incubation period the clay-micelles complex is permitted to sediment and the sediment is then collected. The sedimentation may be a free, gravity-induced sedimentation or may be a forced one, e.g. using a centrifuge.

After the addition of the micelles followed by the addition of particulate clay or after the introduction of said complex, as the case may be, the micelles or said complex are typically incubated for a time period allowing the micelles to absorb the pollutants from the water. During such an incubation stage, the water may be stirred or agitated so as to improve the rate and/or efficiency of absorption. Where the micelles and the particulate clay are introduced separately, there may be an incubation period occurring prior to the introduction of the particulate clay.

The micelles and the clay will typically be introduced in the water in the form of an aqueous suspension. A micelle formulation, the particulate clay and a formulation comprising said complex, may originally be in a dry or lyophilized form.

## BRIEF DESCRIPTION OF THE DRAWINGS

In order to understand the invention and to see how it may be carried out in practice, a preferred embodiment will now be described, by way of non-limiting example only, with reference to the accompanying drawings, in which:

**Fig. 1** shows the chemical structures of two organic cations forming micelles for capturing organic pollutants and several neutral pollutants.

**Fig. 2** (A) shows the chemical structure of the tetracycline family; (B) the various substituents in the tetracycline family; (C) chemical structure and dissociation constants of several antibacterials.

**Figs. 3(A)-(E)** show the isotherms of adsorption of (A) acetochlor, (B) imazaquine, (C) bromacil, (D) alachlor, (E) chlorotoluron, on micelle-clay complexes. Diamonds and squares correspond to BDMHDA-clay; triangles and circles correspond to ODTMA-clay; squares and circles (dash line) show the calculated values.

## DETAILED DESCRIPTION OF EXEMPLARY EMBODIMENTS

As mentioned the present invention is directed to a method for purifying water from neutral and/or anionic pollutants present therein. Use is made a mixture of a granular material and a complex comprised of micelles of organic cation adsorbed on clay which may contained in a container. As already pointed out above, the invention is not limited to the use of a container and it is possible, for example, to introduce said mixture into water reservoirs for *in situ* water purification.

The container is preferably in the form of a column where the system may be formed of a single column or comprise a two or more columns connected in series or in parallel by channels, pipes or any conduit enabling the flow (by gravity or by forced pumping) of water between them. While column is a preferred container type according to the invention, the invention is not limited thereto and other container types may be used. These include containers adapted for a batch-type purification process, such as open pools or basins, tanks, with or without a water stirrer or agitator. For purification the water is introduced and the removed after a time sufficient for removal of the pollutants form the water by said mixture. These also include containers for a flow-based purification process in which the liquid is flown through or over said mixture, including columns, flow-through reservoirs or pools with inlet at one or more points and outlet at one or more other points situated such so as to ensure flow of water through or over said mixture in manner to permit removal of the contaminants from the water.

Columns may either be fully filled with said mixture or the column may comprise also layers filled with a different composition. The layer filled with a different composition may, for example, be a thin layer at one end, e.g. its bottom, the width of such layer being about 7-10% of the length of the column, said layer comprising only the granular material or a mixture of the granular material and clay (without the organic cation). It is also possible, by some embodiments of the invention, for the column to have alternate first and second types of layers, which may be of the same or different thicknesses, wherein the first layers contain said mixture and the second layers comprising of a different composition.

Micelle-clay complexes are known and used in the removal of anionic organic molecules from water, (*11-14*).

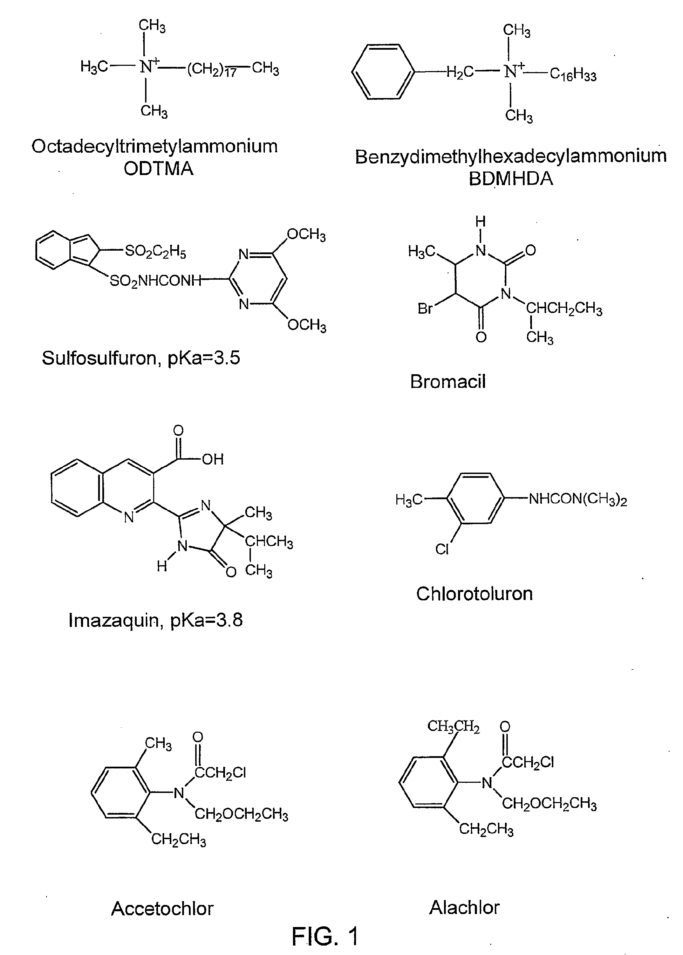

For efficient use of the micelle-clay complexes as a filter for contaminants, the micelle-clay is prepared first and dried (14). According to the present invention the organic cation/clay complex is optimized by a selection of preferred organic cations which form an organic cation/clay complex where the organic cation is in the form of a micelle. In addition, the optimized complex is mixed with a granular material, preferably sand, yielding an efficient combination for purification of a variety of contaminants from water. According to the present invention, the optimized micelle-clay system alone is also powerful in the removal of neutral molecules from water, as shown in Tables 1 to 5, although the combined system comprising the mixture yields far better purification of water from dissolved contaminants. Optimization of the removal of neutral pollutants from water requires a optimization of the structurally compatible organic cations composing the micelles, those having a long alkyl chain and having a low critical micelle concentration (CMC). A concentrated solution (several mM) of organic cations is prepared, where the cations include a large hydrophobic part and consequently have the desired very low CMC. Such cations are octadecyltrimethylammonium (ODTMA) which has an alkyl chain of 18 carbon atoms and a CMC of 0.3 mM (11), or benzyldimethylhexadecilammonium (BDMHDA) which has an alkyl chain of 16 carbon atoms and a CMC of 0.6 mM (15) (Fig. 1 for their structural formulae). The anionic and neutral organic pollutants bind well to the positively charged micelles, which attract electrostatically their negatively-charged moieties. Furthermore, the interior parts of the micelles provide a hydrophobic environment for the organic molecules. The micelles with incorporated pollutants, which carry a net positive charge, adsorb on negatively charged clay platelets, e.g., montmorillonite.

Turning to Table 1A it is demonstrated that micelle-clay systems of the present invention remove from contaminated water 99% of the anionic herbicides sulfentrazone and sulfosulfuron for a suspension of less than 1% (w/w) micelle-clay, and 99.5%, 97%, 93% and 95% of the neutral herbicides bromacil, alachlor, acetochlor and chlorotoluron (Fig. 1 for structural formulae of these neutral contaminants) in a suspension containing montmorillonite at 10g/L.

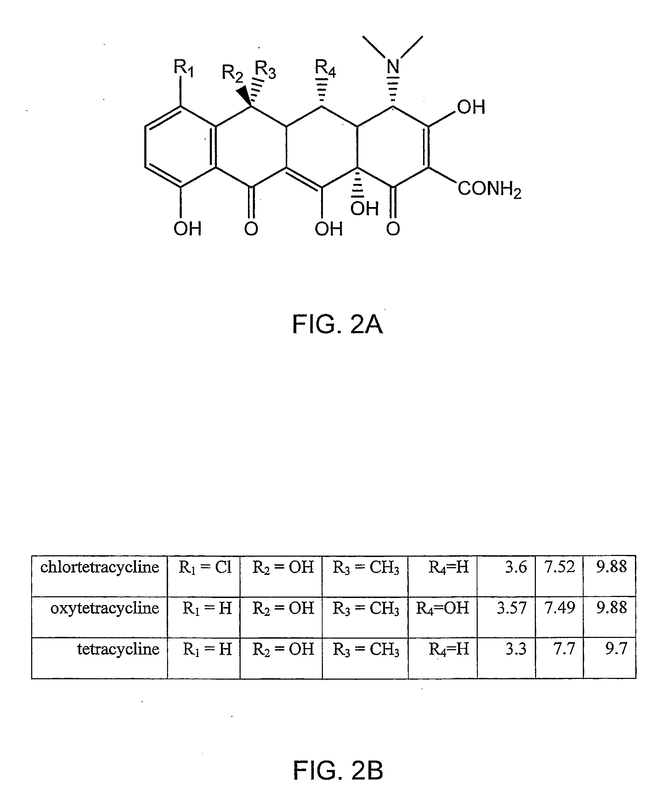

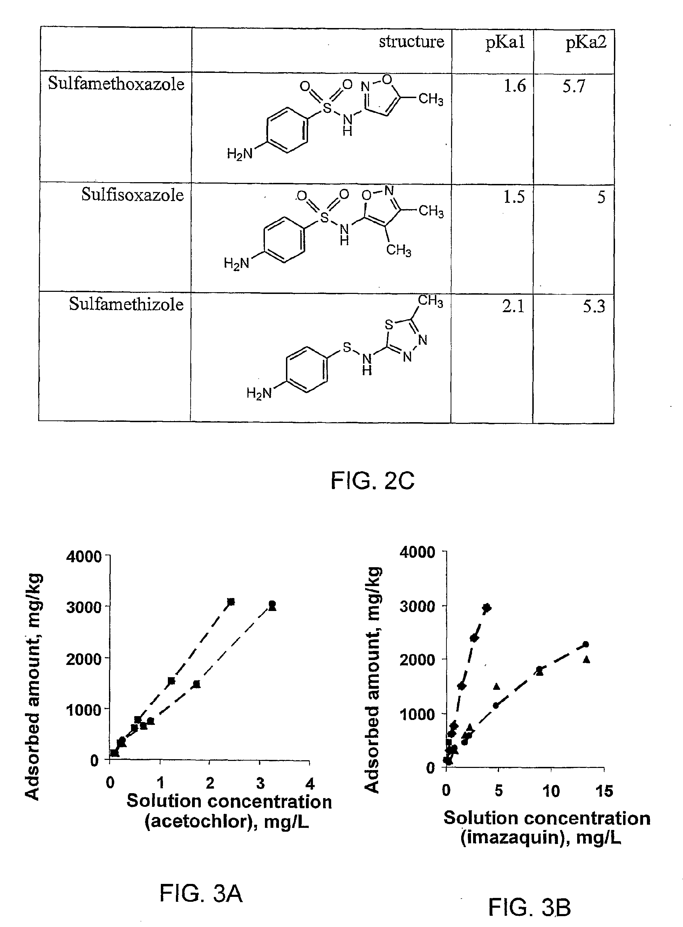

Turning to the anionic pollutants, imazaquin, and benzoic acid, and the neutral pollutants, e.g. herbicides, such as chlorotoluron (Table 1A), the results indicate that the nature of the headgroup of the organic cation which forms the micelle may be critical; compatibility of the aromatic head group of BDMHDA with the aromatic structure of pollutant molecules led to a significant increase in the sorption of these pollutants. Thus 92% removal of imazaquin was obtained by using BDMHDA, whose headgroup includes an aromatic group and shows some structural similarity to that of imazaquin, whereas ODTMA micelles only yielded 73% removal of imazaquin. Removal of benzoic acid by BDMHDA-clay was 91% versus 61% by ODTMA-clay. A similar preference is observed with the neutral molecules acetochlor and chlorotoluron, which also include an aromatic ring. The importance of interactions between the phenyl rings of certain herbicides and those of organic cations was previously suggested for several hydrophobic herbicides interacting with organo-clays (16). In the present invention, the removal of chlorotoluron by the complex of the invention was enhanced by BDMHDA-clay as compared with ODTMA-clay as shown in (Table 1A). The addition of the dry micelle-clay complex to water containing the pollutants yielded similar or slightly smaller percentages of pollutant removal. Turning to **Table 1B** it is demonstrated that the micelle-clay/sand system of the present invention is also efficient in the removal of antibiotics such as tetracycline and oxytetracycline **(Figs. 2(A)** and **2(B)** for their structural formulae) from water.

**Table 1A**

| Removal of organic molecules from water by ODTMA-clay and BDMHDA-clay complexes | | | | | |
|---|---|---|---|---|---|
| Herbicide | Organic cation | *Clay conc. (g/L)* | Cation conc. (mM) | Initial herbicide conc. (mg/L) | % Removed |
| Sulfentrazone | ODTMA | 2 | 2.5 | 33.3 | 99 |
| Sulfentrazone | BDMHDA | 2 | 2.5 | 33.3 | 99 |
| Sulfosulfuron | ODTMA | 5 | 5 | 23.5 | 99 |
| Imazaquin | ODTMA | 10 | 12 | 8.33 | 73 |
| Imazaquin | BDMHDA | 10 | 12 | 8.33 | 92 |
| Chlorotoluron | ODTMA | 10 | 12 | 6.67 | 78 |
| Chlorotoluron | BDMHDA | 10 | 12 | 6.67 | 95 |
| Bromacil | BDMHDA | 10 | 12 | 5 | 99.5 |
| Acetochlor | ODTMA | 10 | 12 | 6.67 | 90 |
| Acetochlor | BDMHDA | 10 | 12 | 0.16 | 92[a] |
| Acetochlor | BDMHDA | 10 | 12 | 6.67 | 93 |

(continued)

| Removal of organic molecules from water by ODTMA-clay and BDMHDA-clay complexes | | | | | |
|---|---|---|---|---|---|
| Herbicide | Organic cation | *Clay conc. (g/L)* | Cation conc. (mM) | Initial herbicide conc. (mg/L) | % Removed |
| Alachlor | BDMHDA | 10 | 12 | 10 | 97 |
| Benzoic acid | ODTMA | 10 | 12 | 6.67 | 61 |
| Benzoic acid | BDMHDA | 10 | 12 | 6.67 | 91 |
| a Initial and final concentrations were analyzed by GC-MS. The standard deviations obtained for adsorption ranged between 3 and 6 %. | | | | | |

### Table 1B

**Water purification from antibiotics by micelle-montmorillonite complexes in suspension (12mM BDMHDA, 10g/l clay)**

| Contaminant | Initial conc., mg/L | % removed |
|---|---|---|
| Tetracycline | 6.67 | 92 |
| Oxytetracycline | 6.67 | 99.8 |
| Sulfamethizole | 6.67 | 99 |
| Sulfamethoxazole | 6.67 | 96.5 |
| Sulfisoxazole | 6.67 | 96.7 |

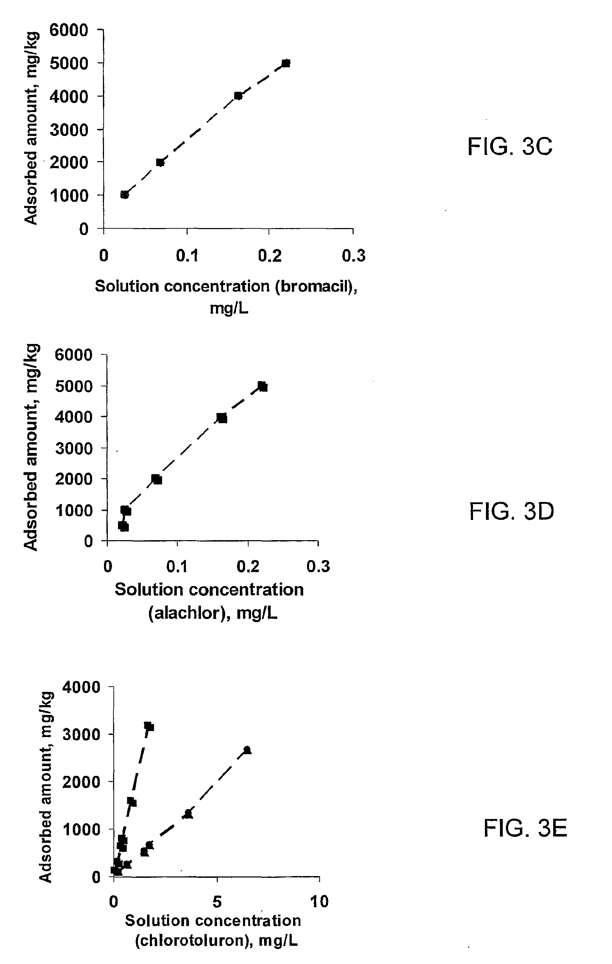

The adsorption isotherms of neutral herbicides are almost linear, as in their partition profile. Analysis by Langmuir equation as described (*16*) yielded good fits as demonstrated in **Figs. 3(A)-(E)** and further in Table 2. Isotherms of adsorption of the anionic pollutant imazaquin are less linear on BDMHDA-clay and ODTMA-clay. This pattern might reflect the decrease of the positive surface potential of micelles in the presence of larger concentrations of the anionic pollutants.

### Table 2

**Analysis of sorption efficacy of micelle-clay complexes by Langmuir equation.**

| Pollutant | BDMHDA-clay | | | ODTMA-clay | | |
|---|---|---|---|---|---|---|
| | $K$ (M$^{-1}$)$^c$ | R$^2$ | *RMSE* (mmol/g) | $K$ (M$^{-1}$) | R$^2$ | *RMSE*$^b$ (mmol/g) |
| Imazaquin | 1000 | 0.999 | $7.1 \times 10^{-5}$ | 270 | 0.914 | $6.1 \times 10^{-4}$ |
| Chlorotoluron | 2500 | 1 | $1.9 \times 10^{-5}$ | 500 | 1 | $8.4 \times 10^{-5}$ |
| Acetochlor | 2000 | 0.999 | $9.5 \times 10^{-5}$ | 1500 | 0.999 | $1.14 \times 10^{-4}$ |
| Alachlor | 3000 | 1 | $3.5 \times 10^{-5}$ | Nd$^a$ | Nd$^a$ | Nd$^a$ |
| Bromacil | 10000 | 1 | $2 \times 10^{-5}$ | Nd$^a$ | Nd$^a$ | Nd$^a$ |

a Not determined. b $$RMSE = \{\sum_{i=1}^{n}(y_{\exp i} - y_{calci})^2 /(n-1)\}^{0.5},$$ , in which $y_{\exp i}$ and $y_{calc i}$ are experimental and calculated adsorbed values, and *n* is the number of experimental points. cThe estimated uncertainties *in* k-values were 10-30%; in the case of bromacil the uncertainty was 50%.

Adsorption of pollutants depended on the micelle-clay ratio as shown in Tables 3 and 4. Maximal adsorption of the anionic imazaquin as well as the neutral alachlor in these experiments was obtained by using 2.5mM of BDMHDA and 2g/L clay. Increasing the concentrations of BDMHDA at the same clay concentration, resulted in a reduction in the amounts of adsorbed herbicides. The explanation is that herbicides bound to the micelles remained in the supernatant solution, due to reduced fraction of the adsorbed micelles, which were in excess relative to the available clay sites.

### Table 3

| Adsorption of imazaquin on BDMHDA-montmorillonite complexes at different micelle-clay ratios. | | | |
|---|---|---|---|
| Complex | Imazaquin added (mg/g) | Imazaquin adsorbed (mg/g) | Imazaquin adsorbed (% from added) |
| 2.5mM, clay 2 g/L, | 8.34 | 7.51±0.1 | 90 ± 1 |
| 2.5 mM, clay 2 g/L | 16.65 | 14.32±0.1 | 86 ± 0.7 |
| 10mM, clay 2 g/L*) | 8.34 | 2.35±0.1 | 28 ± 1 |
| 10mM, clay 2 g/L*) | 16.65 | 4.1±0.25 | 25 ± 1.5 |
| 2mM, clay 10g/L*) | 1.67 | 0.12±0.01 | 7 ± 0.6 |
| 2mM, clay 10g/L *) | 3.33 | 0.11±0.01 | 3 ± 0.3 |
| *) not in accordance with the invention | | | |

### Table 4

| Adsorption of acetochlor on BDMHDA-montmorillonite complexes | | | |
|---|---|---|---|
| Complex | Acetochlor added (mg /g) | Acetochlor adsorbed (mg /g) | Acetochlor adsorbed (% from added) |
| 2.5mM, clay 2g/L | 8.34 | 7.45 ± 0.28 | 89 ± 3 |
| 2.5mM, clay 2 g/L | 16.65 | 14.63 ± 0.45 | 88± 3 |
| 10mM, clay 2 g/L *) | 8.34 | 6.51 ± 0.25 | 78 ± 3 |
| 10mM, clay 2 g/L *) | 16.65 | 12.61 ± 0.33 | 76 ± 2 |
| 2mM, clay 10g/L *) | 1.67 | 0.89±0.01 | 53 ± 1 |
| 2mM, clay 10g/L *) | 3.33 | 1.74±0.07 | 52 ± 2 |
| *) not in accordance with the invention | | | |

When the clay concentration increased for a fixed concentration of organic cation, the adsorption of herbicides decreased. In this case adsorption of BDMHDA monomers on excess clay resulted in decomposition of micelles to monomers. The adsorption of imazaquin and acetochlor on the monomer-clay complexes was significantly lower than that on the micelle-clay complexes as was previously found for sulfometuron (11), sulfentrazone (13) and alizarinate (15). These results demonstrate that efficient removal of pollutants from water by means of the micelle-clay system requires an optimization of the micelle-clay ratio.

Desorption of imazaquin and acetochlor from BDMHDA-clay complex after 24 h was around 7% for 0.3% (w/w) suspension. Desorption decreased after 7 days to 2% for imazaquin. Desorption of acetochlor was 4-7% **(Table 5).** The interpretation of these results is that loosely adsorbed molecules of herbicides were easily released, but then re-adsorbed. Low degree of desorption from ODTMA-montmorillonite complexes was also found for the anionic herbicides sulfometuron and sulfentrazone (11, 13). Desorption of bromacil from 1%(w/w) suspension was less than 1% in the range of adsorbed amounts from 0.19 to 4.98 mg/g.

### Table 5

| Desorption of imazaquin and acetochlor from BDMHDA-montmorillonite complexes (3g/L) | | | |
|---|---|---|---|
| Herbicide added, mg/g | % adsorption | % desorption | |
| | | 1 day | 7 days |
| Imazaquin | | | |
| 0.67 | 93 | 5.9 | 2.3 |
| 1.67 | 93 | 6.5 | nd[a] |

(continued)

| Imazaquin | | | |
|---|---|---|---|
| 3.33 | 93 | 8.1 | 1.9 |
| 16.67 | 92 | 6.0 | 1.3 |
| Acetochlor | | | |
| 0.67 | 96 | 5.7 | 3.9 |
| 1.67 | 94 | 6.4 | Nd |
| 3.33 | 91 | 8.3 | 7.3 |
| 16.67 | 91 | 6.0 | Nd |
| [a]Not determined. The standard deviation obtained for desorption ranged between 0.5 and 3%. | | | |

Turning to the at least one column filled with the mixture of (i) a granular material and (ii) a complex of organic cation adsorbed on clay as a micelle (hereinafter Column filters), the efficacy of column filters containing a mixture of quartz sand and BDMHDA micelle-clay complex at 100:1 w/w ratio for removal of pollutants from water is shown in **Table 6.** More than 99% of sulfentrazone, sulfosulfuron, imazaquine, alachlor, acetochlor and chlorotoluron were removed from the solutions of 10mg/L; 97% of alachlor was removed from the solution of 0.005mg/L.

The efficacy of column filters (25 cm length; diameter 5 cm) containing a mixture of quartz sand and BDMHDA micelle-clay complex at 100:1 (w/w) ratio (23 cm followed by a layer of 2 cm quartz sand) for removal of pollutants from water is shown in **Table 6.** More than 99% of sulfentrazone, alachlor, chlorotoluron and sulfosulfuron were removed from the solutions of 10mg/L; 97% of alachlor was removed from the solution of 0.005 mg/L. Removal of ethylene dibromide was 92.5%.

**Table 6** also includes for comparison, for several pollutants, the percentage values of removal by a filter filled with activated carbon mixed with sand. The results indicate that the filter based on the sand/micelle-clay complex is much more efficient than the one containing activated carbon one. It is to be noted that 98% removal (by micelle-clay) vs. 58% removal by activated carbon (Table 6, 23 cm length of filter) implies that the fractions of pollutants remaining in solution would be 0.0004 and 0.18, respectively, for a filter whose length is doubled (46 cm), i.e., 450-fold less pollutant would remain in solution for filtration by micelle-clay than by activated carbon. Similar results for the efficiencies of removal were obtained in the presence of fulvic acid or humic acid **(Table 7).**

The initial concentration of the sulfosulfuron solution, which was passed through the column filter, was 200 $\mu$g/L. Hence, 99.5% of initial amount of sulfosulfuron was retained by the column filter (Table 6). Thus, results of the bioassay with small concentrations of sulfosulfuron confirmed the results of experiments with larger concentrations of herbicide, which were measured by HPLC.

**Table 6**

| Removal of organic molecules from water by a column filter containing a mixture of quartz sand and BDMHDA micelle-clay at a 100/1 ratio (w/w) and a comparison to a filter filled with activated carbon (in parenthesis) | | |
|---|---|---|
| Chemical entity | Initial concentration, mg/L | % removed[a] |
| Chlorotoluron | 10 | 99.9 (79.5) |
| Alachlor | 9.5 | 99.5 |
| Alachlor* | 0.005 | 97 |
| Acetochlor | 10 | 99.9 |
| Bromacil | 10 | 99.9 (57.5) |
| Imazaquin | 10 | 99 (61) |
| Sulfentrazone | 10 | 99.5 |
| Sulfosulfuron | 10 | 99.9 (76) |
| Sulfosulfuron | 0.2 | 99.5 |
| Fulvic acid | 80 | 97 |

(continued)

| Removal of organic molecules from water by a column filter containing a mixture of quartz sand and BDMHDA micelle-clay at a 100/1 ratio (w/w) and a comparison to a filter filled with activated carbon (in parenthesis) | | |
|---|---|---|
| Chemical entity | Initial concentration, mg/L | % removed[a] |
| Tetracycline | 10 | 98 (87) |
| Oxytetracycline | 10 | 98 (79) |
| Chlorotetracycline | 10 | 94 (89) |
| Sulfamethoxazole | 10 | 98 (58) |
| Sulfisoxazole | 10 | 97 (45) |
| Sulfamethizole | 10 (8) | 99.9 (58) |
| | 0.01 | 89 (45) |
| Ethylene dibromide | $0:204 \times 10^{-3}$ | 92.5 |
| * Solutions were passed through column filter containing a mixture of quartz sand and micelle-clay at a 100:1 ratio (w/w) and then through 3 sequential columns with quartz sand and clay at 150:1 ratio to remove residual organic cations. The concentration of organic cation in eluate was less than $1\mu g/L$. Micelles of ODTMA were used for ethylene dibromide. The residual concentrations of alachlor (less than ppb), and ethylene dibromide were measured by GC-MS. [a]The standard deviation was 0.5%; in the case of alachlor (0.005) it was 1% | | |

**Table 7**

**Removal of antibiotics (10 mg/L) by a column filter filled with micelle-clay or activated carbon in the presence of fulvic or humic acid**

| | % Removal | | | |
|---|---|---|---|---|
| Antibiotics | Micelle-Clay | | Activated Carbon | |
| | Fulvic acid | Humic acid | Fulvic acid | Humic acid |
| Tetracycline | 99 | 89 | 50 | 81 |
| Sulfamethizole | 98 | 99 | 50 | 64 |

It may be noted that the organic cations employed in the micelle-clay complexes have high affinity for adsorption on montmorillonite (*11, 15*). Thus any released cations can be completely captured by quartz-clay layer. The results of the present invention demonstrate that the micelle-clay system is efficient for the removal of contaminants from water in the range of milligrams to micrograms per liter. Thus more than 99% removal of organic pollutants was achieved by passage of a solution through a 22 cm layer of quartz mixed with micelle-clay at 100/1 ratio. The implication is that there will be seven to eight orders of magnitude reduction in the concentrations of these pollutants for four passages through similar columns or for one passage through a 1 meter column. Consequently, the level of organic pollutants in water can be easily reduced to any desired level by means of the proposed sand/micelle-clay filter column followed by a sand/ clay layer. No difference between elution of compound by methylene chloride or acetone was found.

A carbon analysis was done measuring the amount of the released organic cation from micelle-clay complexes in column-filters for water purification after adding a layer (10cm) of quartz mixed with clay (150:1 w/w) at the bottom of the column. Separate measurements which determined the carbon released from columns filled with quartz or with quartz/clay mixtures are presented in Table 8 (17). The measurements of the Dissolved organic carbon (DOC) showed that the carbon concentration in the filtered water due to the organic cation released from the micelle-clay complexes (0.2 ppm) was less than (or equal within the experimental error) the carbon concentration in the water filtered through the quartz or the quartz- clay mixture. Hence, the carbon analysis showed that in the ppm range all the released cations (ODTMA or BDMHDA) were retained by the column-filter, i.e., by the 10 cm layer of quartz mixed with clay.

In another experiment, the water which eluted or passed through a column filled with quartz mixed with micelle/ clay was also passed three times through a 25 cm column filled with quartz-clay (150:1 w/w) and then concentrated 1000-fold. Measurements with GC-MS showed that the concentration of organic cation in the eluate was less than 1 ppb.

Table 8

| Carbon content of effluents from 25 cm column | |
| --- | --- |
| Column Compositions [a] (W/W) | DOC (mgC/l) |
| Quartz | 0.29 |
| Quartz+clay 1:100 | $0.5 \pm 0.08$ |
| Quartz+clay 1:150 | $0.49 \pm 0.03$ |
| (i)Quartz+BDMHDA/Clay 1:100 (13cm) (ii)Quartz+clay 1:150 (10cm) | $0.2 \pm 0.14$ |
| (i)Quartz+ODTMA 1:100 (13cm) (ii)Quartz+clay 1:150 (10cm) | $0.18 \pm 0.11$ |
| [a] At the bottom of the column was a 3 cm layer of quartz. | |

Table 9 gives capacities of the micelle-clay filter for removal of several pollutants. The results are expressed as percent (W/W) of the total captured pollutant relative to the weight of the micelle, which is included in the filter (2gr). This presentation reflects the fact that the other components in the filter, i.e., sand and clay are much cheaper than the organic cation. The (W/W) percent values varied from 12.7 to 37.

Table 9

| Capacity of the micelle-clay filter for several pollutants expressed as percent (w/w) of pollutant relative to the organic cation. | |
| --- | --- |
| Pollutant | Percent captured (w/w) |
| Bromacil (500 ppm) | 37 |
| Sulfentrazone (75 ppm) | 21.4 |
| Chlorotoluron (50 ppm) | 12.7 |

**EXAMPLES**

**Materials.** The clay used was Wyoming Na-montmorillonite SWy-2 obtained from the Source Clays Repository (Clay Minerals Society, Columbia, MO). Quartz sand (grain size 0.8-1.5 mm) was purchased from Negev Industrial Minerals (Israel). Octadecyltrimethylammonium bromide (ODTMA) was purchased from Sigma-Aldrich (Sigma Chemical Co., St. Louis, MO). Benzyldimethylhexadecylammonium chloride (BDMHDA) was purchased from Fluka Chemie (Buchs, Switzerland). Technical sulfentrazone (purity 91.3%) was obtained from FMC (Princeton, NJ); sulfosulfuron (analytical grade) was obtained from E. I. Du Pont de Nemours and Company (Wilmington, DE). Acetochlor, alachlor, imazaquin, and chlorotoluron (all compounds of 98% purity) were supplied by Agan Makhteshim, Israel. Benzoic acid was purchased from Merck (Darmstadt, Germany). Tetracycline hydrochloride, oxytetracycline hydrochloride, chlortetracycline hydrochloride, sulfamethoxazole, sulfisoxazole, and sulfamethizole were purchased from Sigma-Aldrich or Fluka (Switzerland). Structural formulae of surfactants are shown on Figure 1. Seeds of sorghum ((*Sorghum bicolor* (L.)) from Hazera, (Israel) were used for bioassay tests.

**Adsorption.** ODTMA and BDMHDA were added to the solutions of pollutants. Pollutant-micelle complexes were kept stirring for 72 h. Then 10 ml of micelle-pollutant complexes were mixed in a polypropylene copolymer centrifuge tube with 5ml of water suspension of montmorillonite. Preliminary experiments showed no adsorption of pollutants on the tubes. Concentrations of surfactants in suspensions were 2.5; 5 and 12 mM, i.e., much above their CMC values, which are 0.3 mM and 0.6 mM for ODTMA and BDMHDA, respectively (*11*, *15*). Concentrations of pollutants in suspensions were in the range from 1.33 mg/L to 33.3 mg/L; lower concentrations of 0.16 and 0.005mg/L were also used for acetochlor and alachlor, respectively.

Concentrations of micelle-clay complexes were 2, 5 and 10 g /L. Tubes containing suspensions of pollutants and micelle-clay complexes were kept at $25 \pm 1$ °C under continuous agitation for 72 h. Then the tubes were centrifuged for 20 min. at 15000 g and supernatants were passed through teflon filters (ISI, Israel) of 0.2 $\mu$m pore diameter and analyzed.

Effect of micelle-clay ratio on the adsorption of imazaquin and acetochlor was studied by using the same technique.

**Desorption.** Desorption of imazaquin and acetochlor was studied from BDMHDA-clay complex, which was obtained in adsorption experiments at 2.5 mM BDMHDA, 3 g $L^{-1}$ clay with herbicides. After removing the supernatants 0.045 g of herbicide-micelle-clay complexes were mixed in centrifuge tubes with 15 ml of distilled water; the final complex concentrations were 3 g $L^{-1}$. Tubes were kept at $25\pm1$ °C under continuous agitation for 1 or 7 days. Then the tubes were centrifuged for 20 min. at 15000 g and concentrations of herbicides in supernatants were measured. Adsorption and desorption experiments were performed in triplicate. Desorption of bromacil was studied from from BDMHDA-clay complex, which was obtained in adsorption experiments at 12 mM BDMHDA, 10g $L^{-1}$ clay with herbicide. Adsorption and desorption experiments were performed in triplicate.

**Column filter experiments** were performed with 100/1 (w/w) mixture of quartz sand and BDMHDA-clay complex in a column of 25cm length and of 5 cm diameter. Quartz sand was thoroughly washed by distilled water and dried at 105 °C for 24 h. The micelle-complex was prepared by stirring 2.5 mM of BDMHDA with 2.5 g/L clay for 72h. Then suspensions were centrifuged for 20 min. at 10000 g, supernatants were discarded, and the complex was lyophilized. The column was filled with 700 g sand mixed with 7 g of micelle-clay complex. Non woven polypropylene geo textile filters (Markham Culverts Ltd., Papua New Guinea) were placed on both sides of the column. The column was connected to a peristaltic pump and saturated by distilled water from the bottom (flow 2 or 5 ml/min). In the case of sulfosulfuron tests indicated that the  same outcome was obtained for flow rates between 2 and 20 ml/min. Estimates indicate that the flow rates can be further increased. Then 1200 mL of 10 mg/L herbicide solution (sulfentrazone, imazaquin, alachlor, acetochlor, chlorotoluron, sulfosulfuron or bromacil) or an antibiotic solution (tetracycline, oxytetracycline, chlortetracycline, sulfamethoxazole, sulfisoxazole, or sulfamethizole) were passed through the column. First 200 ml were analyzed separately and the rest amount was collected and analyzed. Within experimental errors, the results were similar. A solution of 0.005 mg/L of alachlor was passed through this column, collected and then passed sequentially through three columns filled with 150/l mixture of quartz sand and montmorillonite in order to remove residual organic cations. The experiments were performed in duplicate.

**Analysis of pollutants.** Solutions were analyzed by HPLC (Merck Hitachi 6200) equipped with a diode array detector. In the experiments with the concentrations of 0.16 mg/L of acetochlor and 0.005mg/L of alachlor measurements were performed by GC-MS.

HPLC column for herbicides was LiChrospher$^R$ 100 RP-18 (5 $\mu$M) and the flow rate was 1.0 mL min$^{-1}$. For anionic pollutants the binary mixtures of organic solvent (acetonitrile or methanol) with water acidified by trifluoroacetic acid to pH $2.95\pm0.09$ were used as mobile phases: acetonitrile/water (50/50) for sulfentrazone; acetonitrile/water (70/30) for sulfosulfuron; methanol/water (60/40) for imazaquin and benzoic acid. For neutral herbicides the following mobile phases were used: acetonitrile/water (70/30) for acetochlor and alachlor; methanol/water (75/25) for chlorotoluron; methanol/water (65/35) for bromacil. The concentrations-of pollutants were measured at the following wavelengths: sulfentrazone at 220 nm, sulfusulfuron at 216 nm, imazaquin at 242nm, benzoic acid at 228 nm, acetochlor and alachlor at 216 nm, chlorotoluron at 248 nm, and bromacil at 280 nm. To analyze the effluent from the column after passing of 10$\mu$g/L of sulfamethizole, the sample was extracted by solid-phase extraction using 3M Empore TM SDS-RPS (47 mm) extraction discs (Varian, CA, USA) and vacuum manifold. Disc was consecutively conditioned with 5 ml and 15 ml of acetonitrile followed by drying under the vacuum after each step of conditioning. Then next 15 ml of acetonitrile was added followed by 15 ml of double-distilled water. One liter of sample was passed through the conditioned disc. Sulfamethizole was consecutively eluted three times by 5 ml of acetonitrile followed by 5 ml of methanol. The eluent was evaporated to 1ml at 60°C under gentle stream of nitrogen. HPLC  column for antibiotics was $3.9\times150$ mm Waters Nova Pak C8 (4 $\mu$m) and the flow rate was 1.0 mL min$^{-1}$. For tetracyclines a ternary mixture of 0.05M $K_2PO_4$ solution acidified by $H_3PO_4$ acid to pH $2.25\pm0.09$ with acetonitrile and methanol (75/15/ 10) used as mobile phases. For sulfa drugs a ternary mixture of 0.05M $NH_4CH_3COO$ solution acidified by $H_3PO_4$ acid to pH $2.4\pm0.1$ with acetonitrile and methanol (70/27/ 3) was used. The concentrations of tetracyclines were measured at 270 nm, the concentrations of sulfa drugs were measured at 280 nm.

For GC-MS analysis water samples of acetochlor and alachlor were extracted by SPE technique using vacuum manifold and a standard Millipore 47 mm filtration apparatus (Bedford, MA). Acetochlor was extracted by the empore extraction disks, 47 mm with $C_{18}$ phase from Varian (Harbor City, CA) and eluted by ethyl acetate, methylene chloride and their 50/50 mixture. The extracts were passed through the tube with anhydrous sodium sulphate to get rid of residual molecules of water. Then the extracts were evaporated to a volume of 1ml with gentle stream of nitrogen at 40°C. GC-MS measurements were performed with (TermoQuest GC Trace2000 Polaris Instrument) fitted with DB-5.MS capillary column, 30m $\times$ 0.25mm i.d. $\times$ 0.25$\mu$m film thickness from J&W Scientific (CA, USA) The carrier gas was helium (linear velocity was 33cm/s). Injector temperature was 250°C. The oven temperature was held at 45°C for 2min, then raised at 40°C/min to 160°C, followed by 5°C/min to 210°C and finally raised at 40°C/min up to 280°C. The transfer line temperature was 295°C. Phenantren $D_{10}$ was used as internal standard.

The eluates obtained from column filter experiment for alachlor analysis were filtered through Whatman GF/C filter followed by ME 25 filters with 0.45-$\mu$m pore diameter (Schleicher & Schull, Dassel, Germany). Then alachlor was extracted by the ENVI $^{TM}$ extraction disks, 47mm with $C_{18}$ phase from Supelco (Bellefonte, PA) and eluted be methylene chloride. Then the extracts were evaporated to a volume of 1ml with gentle stream of nitrogen. GC-MS measurements were performed with Saturn 2000 GC-MS (Varian, Walnut Creek CA) equipped with SPB $^{TM-5}$ capillary column, 30m × 0.25 mm i.d. × 0.25μm film thickness from Supelco (Bellefonte, PA) The carrier gas was helium (linear velocity was 50 cm/s). Injector temperature was 280°C. The oven temperature was held at 50°C for 2min, and then raised at 5°C/min to 260°C. The transfer line temperature was 300°C. Biphenyl was used as internal standard.

**Bioassay.** A bioassay analysis enables easy detection of certain herbicides at level of 1 μg/L. A solution of 200 ppb was passed through the column filter filled with the 100/1 mixture of quartz sand with BDMHDA-complex. Bioassay tests were performed in 9-cm Petri dishes filled with quartz sand (135g per dish). Solutions containing different concentration of sulfosulfuron were added to the dishes (15 ml per dish) to check dose-response of sorghum for the herbicide and to obtain a calibration curve as reported in (18). The eluate from the column was added to Petri dishes. Four replicas were performed for each concentration and for eluate. Sorghum seeds were planted in the sand 1 cm from the bottom of each dish. After sowing, the dishes were sealed and incubated in a dark room at 28° C tilted face up at 80° angles. The root lengths were measured after 3 days of incubation. A calibration curve in bioassay test, was simulated reasonably well ($R^2$= 0.91) by the equation: $y=7.789e^{-0.687x}$, in which $y$ is root length in cm and $x$ is the concentration of sulfosulfuron in μg/L. The average length of the roots of the plants, which were treated by the eluate from the column filter, corresponded to a concentration of 1.08 μg/L.

**REFERENCES**

(1) Carter, A. D. Weed Res., 2000, 40, 113-122.
(2) Beall, G.W. Appl. Clay Sci. 2003, 24, 11-20.
(3) Lagaly, G. Surface and interlayer reactions. In: Proc. of the 10th International Clay Conference. Churchman, G. J., Fitzpatrick, R. W. & Egglegton, R. A. Eds.; CSIRO Pub.: Melbourne, Australia, 1995; pp. 137-144.
(4) Xu, S.; Sheng, G.; Boyd, S. A. Adv. Agron. 1997, 59, 25-62.
(5) Polubesova, T.; Nir, S.; Gerstl, Z.; Borisover, M; Rubin, B. J. Environ. Qual. 2002, 31, 1657-1664.
(6) Rosen, M. J. Surfactants and Interfacial Phenomena. Wiley & Sons: N-Y, 1978; 304pp.
(7) de Castro, B.; Domingues, V.; Gamiero, P.; Lima, J. L.F.C.; Oliveira, A.; Reis, S. Inter. J. Pharm. 1999, 187, 67-75.
(8) Dunn Jr., R. O.; Christian, S. D.; Scamehorn, J. F. Sep. Sci. Technol.1987, 22, 763-789.
(9) Simmons, D. L.; Schovanec, A. L.; Scamehorn J. F.; Christian, S. D.; Taylor, R. W. In: Environmental Remediation: Removing Organic and Metal Ion Pollutants; Vandegrift, G. F.; Reed D. T.; Tasker I. R., Eds.; ACS Symposium Series 509; American Chemical Society; Washington, DC, 1992; pp. 180-193.
(10) Porras-Rodriguez, M.; Talens-Alesson, F. I. Environ. Sci. Techn., 1999, 33, 3206-3209.
(11) Mishael, Y. G.; Undabeytia, T.; Rytwo, G.; Papahadjopoulos-Sternberg, B. Rubin, B.; Nir, S. J. Agric. Food Chem. 2002, 50, 2856-2863.
(12) Mishael, Y. G.; Undabeytia, T.; Rabinovitz, O.; Rubin, B.; Nir, S. J. Agric. Food Chem. 2003, 51, 2553-2559.
(13) Polubesova, T.; Nir, S.; Rabinovitz, O.; Borisover, M.; Rubin, B. J. Agric. Food Chem. 2003, 51, 3410-3414.
(14) Polubesova, T.; Nir, S.; Zadaka, D.; Rabinovitz, O.; Serban, C.; Groisman, L.; Rubin, B. Environ. Sci. Technol. 2005, 39, 2343-2348.
(15) Polubesova T.; Epstein, M.; Yariv, S .; Lapides, I.; Nir, S.. Appl. Clay Sci. 2004, 24, 177-183.
(16) Nir, S.; Undabeytia, T.; Yaron-Marcovich, D.; El-Nahhal, Y.; Polubesova, T.; Serban, C.; Rytwo, G.; Lagaly, G.; Rubin, B. Environ. Sci. Technol. 2000, 34, 1269-1274.
(17) Zadaka, D.; Polubesova, T.; Mishael, Y.; Spitzy, A.; Koehler, H.; Wakshal, E.; Rabinovitz, O.; Nir, S. Appl. Clay Sci. 2005, 29, 282-286.
(18) Nadler-Hassar, T.; Rubin, B. Weed Res. 2003, 43, 341-347.

**Claims**

1.   A method for purifying an aqueous solution from neutral or anionic pollutants present therein comprising contacting the polluted aqueous solution with a mixture of (i) a granular material and (ii) a complex comprising micelles of an organic cation adsorbed on clay, wherein the ratio of the organic cation and the clay is 0.3:1 to 0.7:1 (w/w).

2.   The method of claim 1 wherein the ratio (w/w) between the granular material and said complex being in the range of 5:1 to 200:1, preferably 50:1 to 120:1 and most preferably 75:1 to 100: 1.

3.   A method according to claim 1 wherein the ratio of the organic cation and the clay is 0.4:1 to 0.6:1

**4.** A method according to claim 3 wherein the ratio of the organic cation and the clay is 0.45:1 to 0.5:1.

**5.** A method according to any one of claims 1-4 wherein the granular material has an average particles size from 0.2mm to 2mm.

**6.** A method according to any one of claims 1-5, wherein said granular material is sand.

**7.** A method according to any one of claims 1-6, wherein the clay is an aggregate of hydrous silicate particles having a diameter of less than $4\mu m$.

**8.** A method according to Claim 7, wherein the clay is selected from kaolinite-serpentine, illite, and smectite.

**9.** A method according to any one of claims 1-8, wherein said contacting is by passing the polluted water through a container comprising said mixture.

**10.** A method according to Claim 9, wherein said container is a column.

**11.** A method according to any one of claims 1-10 wherein said organic cation has a low critical micelle concentration of less than 1 mM.

**12.** A method according to claim 11, wherein the organic cation is an ammonium cation of the type $X^+Y^-$ wherein $X^+$ is an $R''-N(R')_3$, R' being each independently a $C_{1-4}$alkyl group, an optionally substituted phenyl or an alkylphenyl group; R'' is $C_{12}-C_{20}$-alkyl preferably $C_{14}-C_{20}$-alkyl, most preferably $C_{16}-C_{20}$-alkyl and Y' is a counter ion.

**13.** A method according to claim 12 wherein Y is selected from $Cl^-$, $Br^-$ or $OH^-$,

**14.** A method according to claim 12 wherein at least one of the R' groups is methyl, ethyl, propyl, pheny, benzyl and R'' is $C_{14}H_{29}$, $C_{15}H_{31}$, $C_{16}H_{33}$, $C_{16}H_{31}$, $C_{17}H_{35}$, $C_{17}H_{33}$, $C_{18}H_{37}$, $C_{18}H_{35}$, $C_{19}H_{39}$ $C_{19}H_{37}$, $C_{20}H_{41}$, $C_{20}H_{39}$.

**15.** A method according to any one of claims 1-14, wherein said neutral or anionic pollutants are organic pollutants.

**16.** A method according to claims 15 wherein the neutral pollutants are selected from the group comprising of neutral herbicides and halogenated $C_{1-8}$alkyls.

**17.** A method according to claim 16, wherein the neutral herbicides are selected from chloroacetamides, uracils or ureas and the halogenated $C_{1-8}$alkyls are $C_{1-8}$halogenoalkenyls, $C_{1-8}$halogenoalkynyls which optionally may be perhalogenated.

**18.** A method according to claim 17, wherein said neutral pollutants are selected from the group consisting of alachlor, acetachlor, bromacil, chlorotoluron, isoproturon, isouron, propachlor, dimethachlor, lenacyl, terbacil and the halogentated $C_{1-8}$ moieties are methyl, ethyl, ethenyl, ethynyl, propyl, propenyl, propynyl, butyl, butylenyl, butynyl, pentyl, pentenyl, pentynyl hexyl, hexenyl, hexynyl comprising at least one halogen.

**19.** A method according to claim 15, wherein said anionic pollutants are selected from the group consisting of imidazolinones, triazolinones, sulfonylurea, aromatic carboxylic acids, humic acid or fulvic acid, antibiotics or their mixtures.

**20.** A method according to claim 19, wherein said anionic pollutants are selected from the group consisting of imazaquin, imazethapyr, imazapyr, imazamethabenz-methyl, imazamox, imazapic, chlorsulfuron, imazosulfuron, pyrazosulfuron-ethyl, primisulfuron,-methyl, nicosulfuron, bensulfuron-methyl, amicarbazone, azafenidin, sulfentrazone, sulfosulfuron, tetracyclines and antibacterial agents.

**Patentansprüche**

**1.** Verfahren zum Reinigen einer wässrigen Lösung von darin vorhandenen neutralen oder anionischen Schmutzstoffen, umfassend das Inkontaktbringen der verschmutzten wässrigen Lösung mit einer Mischung von (i) einem granulärem Material und (ii) einem Komplex umfassend Mizellen von einem organischen Kation adsorbiert an Ton, wobei das Verhältnis des organischen Kations und des Tons 0,3:1 bis 0,7:1 (Gew./Gew.) beträgt.

2. Verfahren nach Anspruch 1, wobei das Verhältnis (Gew./Gew.) zwischen dem granulären Material und dem Komplex in dem Bereich von 5:1 bis 200:1, vorzugsweise 50:1 bis 120:1 und am stärksten bevorzugt 75:1 bis 100:1 liegt.

3. Verfahren nach Anspruch 1, wobei das Verhältnis des organischen Kations und des Tons 0,4:1 bis 0,6:1 beträgt.

4. Verfahren nach Anspruch 3, wobei das Verhältnis des organischen Kations und des Tons 0,45:1 bis 0,5:1 beträgt.

5. Verfahren nach einem der Ansprüche 1-4, wobei das granuläre Material eine mittlere Teilchengröße von 0,2 mm bis 2 mm aufweist.

6. Verfahren nach einem der Ansprüche 1-5, wobei das granuläre Material Sand ist.

7. Verfahren nach einem der Ansprüche 1-6, wobei der Ton ein Aggregat von wasserhaltigen Silicatteilchen mit einem Durchmesser von weniger als 4 $\mu$m ist.

8. Verfahren nach Anspruch 7, wobei der Ton ausgewählt ist aus Kaolinit-Serpentin, Illit und Smektit.

9. Verfahren nach einem der Ansprüche 1-8, wobei das Inkontaktbringen durch Leiten des verschmutzten Wassers durch einen Behälter erfolgt, der die Mischung umfasst.

10. Verfahren nach Anspruch 9, wobei der Behälter eine Säule ist.

11. Verfahren nach einem der Ansprüche 1-10, wobei das organische Kation eine niedrige kritische Mizellenkonzentration von weniger als 1 mM aufweist.

12. Verfahren nach Anspruch 11, wobei das organische Kation ein Ammoniumkation des Typs $X^+Y^-$ ist, wobei $X^+$ ein $R''-N(R')_3$ ist, wobei R' jeweils unabhängig eine $C_{1-4}$-Alkylgruppe, ein gegebenenfalls substituiertes Phenyl oder eine Alkylphenylgruppe ist; R'' ist $C_{12}$-$C_{20}$-Alkyl vorzugsweise $C_{14}$-$C_{20}$-Alkyl, am stärksten bevorzugt $C_{16}$-$C_{20}$-Alkyl und $Y^-$ ist ein Gegenion.

13. Verfahren nach Anspruch 12, wobei Y ausgewählt ist aus $Cl^-$, $Br^-$ oder $OH^-$.

14. Verfahren nach Anspruch 12, wobei wenigstens eine der R'-Gruppen Methyl, Ethyl, Propyl, Phenyl, Benzyl ist, und R'' $C_{14}H_{29}$, $C_{15}H_{31}$, $C_{16}H_{33}$, $C_{16}H_{31}$, $C_{17}H_{35}$, $C_{17}H_{33}$, $C_{18}H_{37}$, $C_{18}H_{35}$, $C_{19}H_{39}$ $C_{19}H_{37}$, $C_{20}H_{41}$, $C_{20}H_{39}$ ist.

15. Verfahren nach einem der Ansprüche 1-14, wobei die neutralen oder anionischen Schmutzstoffe organische Schmutzstoffe sind.

16. Verfahren nach Anspruch 15, wobei die neutralen Schmutzstoffe ausgewählt sind aus der Gruppe umfassend neutrale Herbizide und halogenierte $C_{1-8}$-Alkyle.

17. Verfahren nach Anspruch 16, wobei die neutralen Herbizide ausgewählt sind aus Chloracetamiden, Uracilen oder Harnstoffen und die halogenierten $C_{1-8}$-Alkyle $C_{1-8}$-Halogenalkenyle, $C_{1-8}$-Halogenalkinyle sind, welche gegebenenfalls perhalogeniert sein können.

18. Verfahren nach Anspruch 17, wobei die neutralen Schmutzstoffe ausgewählt sind aus der Gruppe bestehend aus Alachlor, Acetachlor, Bromacil, Chlortoluron, Isoproturon, Isouron, Propachlor, Dimethachlor, Lenacyl, Terbacil und die halogenierten $C_{1-8}$-Einheiten Methyl, Ethyl, Ethenyl, Ethinyl, Propyl, Propenyl, Propinyl, Butyl, Butylenyl, Butinyl, Pentyl, Pentenyl, Pentinyl, Hexyl, Hexenyl, Hexinyl, die wenigstens ein Halogen umfassen, sind.

19. Verfahren nach Anspruch 15, wobei die anionischen Schmutzstoffe ausgewählt sind aus der Gruppe bestehend aus Imidazolinonen, Triazolinonen, Sulfonylharnstoff, aromatischen Carbonsäuren, Huminsäure oder Fulvosäure, Antibiotika oder ihren Mischungen.

20. Verfahren nach Anspruch 19, wobei die anionischen Schmutzstoffe ausgewählt sind aus der Gruppe bestehend aus Imazaquin, Imazethapyr, Imazapyr, Imazamethabenz-methyl, Imazamox, Imazapic, Chlorsulfuron, Imazosulfuron, Pyrazosulfuron-ethyl, Primisulfuronmethyl, Nicosulfuron, Bensulfuron-methyl, Amicarbazon, Azafenidin, Sulfentrazon, Sulfosulfuron, Tetracyclinen und antibakteriellen Wirkstoffen.

**EP 1 851 173 B1**

**Revendications**

1. Procédé de purification d'une solution aqueuse pour la débarrasser de polluants neutres ou anioniques qui y sont présents, comprenant la mise en contact de la solution aqueuse polluée avec un mélange de (i) un matériau granulaire et de (ii) un complexe comprenant des micelles d'un cation organique adsorbées sur de l'argile, le rapport du cation organique à l'argile étant de 0,3:1 à 0,7:1 (p/p).

2. Procédé de la revendication 1 dans lequel le rapport (p/p) du matériau granulaire audit complexe se situe dans la plage de 5:1 à 200:1, de préférence de 50:1 à 120:1 et le plus préférentiellement de 75:1 à 100:1.

3. Procédé selon la revendication 1, dans lequel le rapport du cation organique à l'argile est de 0,4:1 à 0,6:1.

4. Procédé selon la revendication 3, dans lequel le rapport du cation organique à l'argile est de 0,45:1 à 0,5:1.

5. Procédé selon l'une quelconque des revendications 1 à 4, dans lequel le matériau granulaire a une granulométrie moyenne de 0,2 mm à 2 mm.

6. Procédé selon l'une quelconque des revendications 1 à 5, dans lequel ledit matériau granulaire est du sable.

7. Procédé selon l'une quelconque des revendications 1 à 6, dans lequel l'argile est un agrégat de particules de silicate hydraté ayant un diamètre inférieur à 4 $\mu$m.

8. Procédé selon la revendication 7, dans lequel l'argile est choisie parmi la kaolinite-serpentine, l'illite, et la smectite.

9. Procédé selon l'une quelconque des revendications 1 à 8, dans lequel ladite mise en contact se fait par passage de l'eau polluée à travers un contenant comprenant ledit mélange.

10. Procédé selon la revendication 9, dans lequel ledit contenant est une colonne.

11. Procédé selon l'une quelconque des revendications 1 à 10, dans lequel ledit cation organique a une faible concentration critique de formation de micelles, qui est inférieure à 1 mM.

12. Procédé selon la revendication 11, dans lequel le cation organique est un cation ammonium du type $X^+Y^-$ où $X^+$ est un $R''-N(R')_3$, les $R'$ étant chacun indépendamment un groupe alkyle en $C_{1-4}$, phényle éventuellement substitué ou alkylphényle ; $R''$ est un groupe alkyle en $C_{12}-C_{20}$, de préférence alkyle en $C_{14}-C_{20}$, le plus préférentiellement alkyle en $C_{16}-C_{20}$ et $Y^-$ est un contre-ion.

13. Procédé selon la revendication 12 dans lequel Y est choisi parmi $Cl^-$, $Br^-$ ou $OH^-$.

14. Procédé selon la revendication 12 dans lequel au moins un des groupes $R'$ est un méthyle, éthyle, propyle, phényle, benzyle et $R''$ est $C_{14}H_{29}$, $C_{15}H_{31}$, $C_{16}H_{33}$, $C_{16}H_{31}$, $C_{17}H_{35}$, $C_{17}H_{33}$, $C_{18}H_{37}$, $C_{18}H_{35}$, $C_{19}H_{39}$, $C_{19}H_{37}$, $C_{20}H_{41}$, $C_{20}H_{39}$.

15. Procédé selon l'une quelconque des revendications 1 à 14, dans lequel lesdits polluants neutres ou anioniques sont des polluants organiques.

16. Procédé selon la revendication 15 dans lequel les polluants neutres sont choisis dans le groupe comprenant les herbicides neutres et les alkyles en $C_{1-8}$ halogénés.

17. Procédé selon la revendication 16, dans lequel les herbicides neutres sont choisis parmi les chloracétamides, uraciles ou urées et les alkyles en $C_{1-8}$ halogénés sont des halogénoalcényles en $C_{1-8}$, des halogénoalcynyles en $C_{1-8}$ qui peuvent éventuellement être perhalogénés.

18. Procédé selon la revendication 17, dans lequel lesdits polluants neutres sont choisis dans le groupe constitué par les suivants : alachlor, acétachlor, bromacile, chlorotoluron, isoproturon, isouron, propachlor, diméthachlor, lénacile, terbacile, et les groupements en $C_{1-8}$ halogénés sont des méthyle, éthyle, éthényle, éthynyle, propyle, propényle, propynyle, butyle, butylényle, butynyle, pentyle, pentényle, pentynyle, hexyle, hexényle, hexynyle comprenant au moins un halogène.

**19.** Procédé selon la revendication 15, dans lequel lesdits polluants anioniques sont choisis dans le groupe constitué par les imidazolinones, triazolinones, sulfonylurées, acides carboxyliques aromatiques, acide humique ou acide fulvique, antibiotiques ou leurs mélanges.

**20.** Procédé selon la revendication 19, dans lequel lesdits polluants anioniques sont choisis dans le groupe constitué par les suivants : imazaquine, imazéthapyr, imazapyr, imazaméthabenz-méthyle, imazamox, imazapic, chlorsulfuron, imazosulfuron, pyrazosulfuron-éthyle, primisulfuron-méthyle, nicosulfuron, bensulfuron-méthyle, amicarbazone, azafénidine, sulfentrazone, sulfosulfuron, tétracyclines et agents antibactériens.

Octadecyltrimetylammonium
ODTMA

Benzydimethylhexadecylammonium
BDMHDA

Sulfosulfuron, pKa=3.5

Bromacil

Imazaquin, pKa=3.8

Chlorotoluron

Accetochlor

Alachlor

## FIG. 1

FIG. 2A

| chlortetracycline | R₁ = Cl | R₂ = OH | R₃ = CH₃ | R₄=H | 3.6 | 7.52 | 9.88 |
|---|---|---|---|---|---|---|---|
| oxytetracycline | R₁ = H | R₂ = OH | R₃ = CH₃ | R₄=OH | 3.57 | 7.49 | 9.88 |
| tetracycline | R₁ = H | R₂ = OH | R₃ = CH₃ | R₄=H | 3.3 | 7.7 | 9.7 |

FIG. 2B

| | | structure | pKa1 | pKa2 |
|---|---|---|---|---|
| Sulfamethoxazole | | | 1.6 | 5.7 |
| Sulfisoxazole | | | 1.5 | 5 |
| Sulfamethizole | | | 2.1 | 5.3 |

FIG. 2C

FIG. 3A

FIG. 3B

FIG. 3C

FIG. 3D

FIG. 3E

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 02052939 A
- US 4916095 A
- US 6524485 A

### Non-patent literature cited in the description

- **CARTER, A. D.** *Weed Res.,* 2000, vol. 40, 113-122
- **BEALL, G.W.** *Appl. Clay Sci.,* 2003, vol. 24, 11-20
- Surface and interlayer reactions. **LAGALY, G.** Proc. of the 10th International Clay Conference. CSIRO Pub, 1995, 137-144
- **XU, S. ; SHENG, G. ; BOYD, S. A.** *Adv. Agron.,* 1997, vol. 59, 25-62
- **POLUBESOVA, T. ; NIR, S. ; GERSTL, Z.; ; BORISOVER, M ; RUBIN, B.** *J. Environ. Qual.,* 2002, vol. 31, 1657-1664
- **ROSEN, M. J.** Surfactants and Interfacial Phenomena. Wiley & Sons, 1978, 304pp
- **DE CASTRO, B. ; DOMINGUES, V. ; GAMIERO, P. ; LIMA, J. L.F.C. ; OLIVEIRA, A. ; REIS, S.** *Inter. J. Pharm.,* 1999, vol. 187, 67-75
- **DUNN JR., R. O. ; CHRISTIAN, S. D. ; SCAMEHORN, J. F.** *Sep. Sci. Technol.,* 1987, vol. 22, 763-789
- **SIMMONS, D. L. ; SCHOVANEC, A. L. ; SCAMEHORN J. F. ; CHRISTIAN, S. D. ; TAYLOR, R. W.** Environmental Remediation: Removing Organic and Metal Ion Pollutants. ACS Symposium Series 509; American Chemical Society, 1992, 180-193
- **PORRAS-RODRIGUEZ, M. ; TALENS-ALESSON, F. I.** *Environ. Sci. Techn.,* 1999, vol. 33, 3206-3209
- **MISHAEL, Y. G. ; UNDABEYTIA, T. ; RYTWO, G. ; PAPAHADJOPOULOS-STERNBERG, B. ; RUBIN, B. ; NIR, S.** *J. Agric. Food Chem.,* 2002, vol. 50, 2856-2863
- **MISHAEL, Y. G. ; UNDABEYTIA, T. ; RABINOVITZ, O. ; RUBIN, B. ; NIR, S.** *J. Agric. Food Chem.,* 2003, vol. 51, 2553-2559
- **POLUBESOVA, T. ; NIR, S. ; RABINOVITZ, O. ; BORISOVER, M. ; RUBIN, B.** *J. Agric. Food Chem.,* 2003, vol. 51, 3410-3414
- **POLUBESOVA, T. ; NIR, S. ; ZADAKA, D. ; RABINOVITZ, O. ; SERBAN, C. ; GROISMAN, L. ; RUBIN, B.** *Environ. Sci. Technol.,* 2005, vol. 39, 2343-2348
- **POLUBESOVA T. ; EPSTEIN, M. ; YARIV, S . ; LAPIDES, I. ; NIR, S..** *Appl. Clay Sci.,* 2004, vol. 24, 177-183
- **NIR, S. ; UNDABEYTIA, T. ; YARON-MARCOVICH, D.; ; EL-NAHHAL, Y. ; POLUBESOVA, T. ; SERBAN, C. ; RYTWO, G. ; LAGALY, G. ; RUBIN, B.** *Environ. Sci. Technol.,* 2000, vol. 34, 1269-1274
- **ZADAKA, D. ; POLUBESOVA, T. ; MISHAEL, Y. ; SPITZY, A. ; KOEHLER, H. ; WAKSHAL, E. ; RABINOVITZ, O. ; NIR, S.** *Appl. Clay Sci.,* 2005, vol. 29, 282-286
- **NADLER-HASSAR, T. ; RUBIN, B.** *Weed Res.,* 2003, vol. 43, 341-347